# EUROPÄISCHE PATENTSCHRIFT

(11) **EP 0 741 116 B1**
(45) Veröffentlichungstag und Bekanntmachung des Hinweises auf die Patenterteilung: **11.11.1998**
(21) Anmeldenummer: 96201099.7
(22) Anmeldetag: 24.04.1996
(51) Int. Cl.: C04B 37/02, B23K 26/00, B23K 35/00

(54) **Verfahren zur Herstellung eines thermisch hoch belastbaren Bauteiles**
Process for manufacturing of components with high thermal load capability
Procédé de fabrication d'élément à haute résistance thermique

(30) Priorität: 02.05.1995 AT 742/95
(43) Veröffentlichungstag der Anmeldung: 06.11.1996
(73) Patentinhaber: PLANSEE Aktiengesellschaft, 6600 Reutte, Tirol (AT)
(72) Erfinder: Kneringer, Günter, Dr., 6600 Reutte (AT); Plöchl, Laurenz, 6600 Breitenwang (AT); Rainer, Florian, 6600 Lechaschau (AT)
(74) Vertreter: Lohnert, Wolfgang, Dr.

(56) Entgegenhaltungen:
- EP-A- 0 262 699
- WO-A-95/07869
- DE-A- 2 543 140
- US-A- 4 746 582
- US-A- 5 230 924
- US-A- 5 407 119
- PATENT ABSTRACTS OF JAPAN vol. 010, no. 304 (M-526), 16.Oktober 1986 & JP-A-61 117003 (SAN ALLOY KOGYO KK), 4.Juni 1986,
- PATENT ABSTRACTS OF JAPAN vol. 013, no. 465 (M-882), 20.Oktober 1989 & JP-A-01 181988 (HITACHI LTD;OTHERS: 01), 19.Juli 1989,

## Beschreibung

Die Erfindung betrifft ein Verfahren zur Herstullung eines thermisch hoch belastbaren Bauteils, bei dem ein oder mehrere Teile aus hochhitzebeständigem Material mit mindestens einem metallischen Teil verbunden werden, wobei die Teile aus hochhitzebeständigem Material vor der Verbindung auf der zu verbindenden Oberfläche mit einer metallischen duktilen Zwischenschicht versehen werden.

Ein typisches Beispiel für derartige thermisch hoch belastbaren Bauteile sind Divertor und Limiter für Fusionsreaktoren, wie sie beispielsweise in der DE-PS 34 16 843 beschrieben sind. Entsprechend dieser Ausführung von Hitzeschilden wird für die Teile aus hitzebeständigem Material vorzugsweise Graphit verwendet, die mit den metallischen Teilen in Form von Rohren und in der Funktion von Kühlmittelleitungen, vorzugsweise aus Molybdän, durch eine Lötverbindung verbunden sind. Als Lotwerkstoff werden dazu Silber-Kupferbasislote verwendet, die den hohen Temperaturbeanspruchungen an die Lötverbindung in ausreichender Weise genügen.

Nachteilig bei derartigen Hitzeschilden ist, daß aufgrund der hohen Anforderungen an Temperaturbeständigkeit, gute Wärmeleitfähigkeit und möglichst gleichartige Wärmeausdehnung der einzelnen Teile zur Vermeidung zu großer thermomechanischer Spannungen, sowohl während des Lötvorganges als auch im Betrieb, in der Regel nur relativ teure Werkstoffe, wie Molybdän oder Molybdänlegierungen, für die metallischen Teile eingesetzt werden können.

Es hat zwar nicht an Versuchen gefehlt, auch billigere Materialien für die metallischen Teile, wie z.B. Kupfer oder Nickel-Eisen-Legierungen, zu verwenden. Da diese Materialien anders als Molybdän einen deutlich unterschiedlichen Wärmeausdehnungskoeffizienten gegenüber dem Graphit aufweisen, war bei Verwendung dieser Materialien die Zwischenschaltung einer Zwischenschicht notwendig, um auch bei stark zyklischen thermischen Beanspruchungen eine gute Verbindung aller Bereiche der einzelnen Teile zu gewährleisten.

Ein derartiges, thermisches hoch belastbares Bauteil ist beispielsweise in der WO95/07869 beschrieben. Jedoch auch derartige Bauteile haben vielfach nicht entsprochen, da sich mit der Verwendung von Kupfer bzw. Nickel-Eisen-Legierungen für die metallischen Teile vielfach nicht die erforderliche Hochtemperaturfestigkeit erreichen läßt.

Eine Möglichkeit, die Temperaturfestigkeit derartiger Bauteile weiter zu steigern, ohne wiederum auf das teure Molybdän für die metallischen Teile zurückgreifen zu müssen, ist der Einsatz hochwarmfester Legierungen, wie beispielsweise Kupferlegierungen, die dispersionsverfestigt oder ausscheidungsgehärtet sind. Nachteilig bei diesen Materialien wiederum ist, daß ihre guten mechanischen Festigkeitseigenschaften selbst bei einer nur kurzzeitig zu hohen Temperatureinwirkung deutlich herabgesetzt werden. Die Temperaturen, wie sie beim Verlöten dieser Materialien mit den Graphitteilen üblicherweise auftreten, sind in der Regel schon geeignet, die Festigkeiten in einem nicht tolerierbaren Ausmaß zu verringern.

Die US 5 230 924 beschreibt ein Verfahren zum Metallisieren der Oberflächen von unterschiedlichsten keramischen Werkstoffen, um damit gute Lötverbindungen dieser Werkstoffe mit metallischen Werkstoffen zu ermöglichen. Unter anderem ist dort auch die Metallisierung der Oberfläche der zu verbindenden Werkstoffe und ihre anschließende Verlötung durch Anwendung von Elektronenstrahlen beschrieben. Die Anwendung eines speziellen Elektronenstrahl-Schweißverfahrens für die Verbindung keramischer und metallischer Werkstoffe ist dieser Veröffentlichung nicht zu entnehmen.

Die Aufgabe der vorliegenden Erfindung ist es daher, ein Verfahren zur Herstellung eines thermisch hoch belastbaren Bauteils zu schaffen, bei dem die Teile aus hitzebeständigem Material mit den metallischen Teilen derart verbunden sind, daß für die angestrebte Verwendung als zyklisch belastetes Hochtemperatur-Bauteil nicht tolerierbare thermische Spannungen zwischen den einzelnen Teilen vermieden werden und gleichzeitig preisgünstige, hochwarmfeste Materialien für die metallischen Teile verwendet werden können, ohne daß deren gute Festigkeitseigenschaften während der Herstellung der Verbindung verlorengehen.

Erfindungsgemäß wird dies dadurch erreicht, daß die Verbindung der Teile durch Elektronenstrahlschweißen erfolgt.

Zur Vorbereitung für dieses Elektronenstrahlschweißen werden die Teile aus hitzebeständigem Material, wie Graphit, keramische Werkstoffe oder Wolfram, mit einer duktilen metallischen Zwischenschicht versehen. Die Aufbringung dieser Zwischenschicht kann durch bekannte Verfahren, wie Hintergießen, Plasmaspritzen oder andere geeignete Verfahren aufgebracht werden, durch die eine gute Haftung der Zwischenschicht mit dem hitzebeständigen Material gewährleistet ist. Der Vorteil der Aufbringung der Zwischenschicht vor der Verbindung der hitzebeständigen Materialien mit den metallischen Teilen liegt darin, daß bei der Aufbringung der Zwischenschicht die Prozeßtemperaturen ausschließlich durch die Eigenschaffen des hitzebeständigen Materials begrenzt sind. Unter Verwendung dieser Zwischenschicht wird eine ausgezeichnete Verbindung der einzelnen Teile durch das nachfolgende Elektronenstrahlschweißen miteinander erreicht und es tritt keine Beeinträchtigung der Festigkeitswerte der metallischen Teile auf. Da die duktile Zwischenschicht schlechte Hochtemperatureigenschatten aufweist, soll ihre Dicke möglichst gering gehalten werden. Bekanntlich kommt es bei einem Schweißvorgang in der unmittelbaren Umgebung der Schweißstelle zu einem Erschmelzen des Materiales. Für den Fachmann war daher zu befürchten, daß bei der Anwendung eines Schweißverfahrens für die Verbindung von Teilen aus hitzebeständigen Materialien mit einer sehr dünnen Zwischenschicht mit den metallischen Teilen gravierende Nachteile hinsichtlich der Haftung der Zwischenschicht mit dem hitzebeständigen Material auftreten. Durch die Anwendung des Elektronenstrahlschweißens als Schweißverfahren wird jedoch völlig überraschend auch bei der notwendigen geringfügigen Dicke der Zwischenschicht keine negative Beeinträchtigung der Verbindung der Zwischenschicht zum hitzebeständigen Material bewirkt. Das Elektronenstrahlschweißen ermöglicht eine gleichmäßige Breite der Schweißnaht über die gesamte Schweißtiefe. Der Verzug des verbundenen Bauteils ist äußerst gering.

Besonders vorteilhaft wird das erfindungsgemäße Verfahren angewandt für die Herstellung eines thermisch hoch belastbaren Bauteils unter Verwendung von Graphit, vorzugsweise kohlefaserverstärktem Graphit, für das hitzebeständige Material sowie einer hochwarmfesten Kupferlegierung für das metallische Teil.

Als Zwischenschicht wird in diesem Fall vorteilhafterweise reines Kupfer oder eine Kupferlegierung mit einer Stärke zwischen 0,5 und 2 mm aufgebracht.

Die Erfindung ist jedoch keinesfalls auf die genannten vorteilhaften Ausgestaltungen beschränkt. So sind für das hitzebeständige Material neben Graphit beispielsweise auch keramische Werkstoffe sowie Wolfram geeignet. Für die Zwischenschicht sind beispielsweise auch Chrom oder hochchromhaltige Legierungen mit Kupfer- und/oder Nickelzusätzen geeignet.

Im folgenden wird die Erfindung anhand von Beispielen näher beschrieben.

### BEISPIEL 1:

Ein Kühlkörper für Fusionsreaktoren nach dem "Flat tile design" wurde wie folgt hergestellt:
5 Stück Ziegel aus kohlefaserverstärktem Graphit mit den Abmessungen 26 x 32 x10 mm³ wurden auf den zu verbindenden Oberflächen mit Hilfe eines gepulsten Laserstrahles oberflächenstrukturiert. Danach wurden sie in einem Vakuumofen bei einer Temperatur von etwa 1100°C mit einer 2 mm dicken Reinkupfer-Schicht hintergossen. Die derartig beschichteten Ziegel wurden mit der beschichteten Oberfläche auf einen Stab mit den Abmessungen 32 x 32 x 130 mm³ aus einer ausscheidungsgehärteten Kupfer-Chrom-Zirkonlegierung positioniert und in einer Elektronenstrahlschweiß-Vorrichtung miteinander verschweißt.

Die Schweißparameter wurden so gewählt, daß die Schweißnaht in ihrer Tiefe bis nahezu an die Ziegeloberfläche heranreichte und in diesem Bereich eine möglichst konstante Schweißnahtbreite vorlag. Nach der Schweißung erfolgte die mechanische Bearbeitung des Kühlkörpers auf das Endmaß 125 x 26 x 30 mm³. Die Schweißverbindung wurde metallographisch und durch Ultraschall auf Schweißfehler überprüft. Es konnte eine einwandfreie Schweißverbindung festgestellt werden.

### BEISPIEL 2:

Ein Kühlkörper für Fusionsreaktoren nach dem "Monoblock Design" wurde wie folgt hergestellt:
2 kohlefaserverstärkte Graphitziegel mit den Abmessungen 30 x 22 x 20 mm³ wurden mit einer Bohrung von 15 mm versehen. Danach wurde die Bohrungsoberfläche durch Einbringung von senkrecht zur Oberfläche verlaufenden Bohrungen von etwa 100 µm Durchmesser mittels gepulstem Laser aufgerauht. Nach Reinigung des Graphitteiles wurde dieser im Vakuum bei 1200°C während 60 min geglüht. Die Bohrungsoberfläche wurde vollflächig mit einer 20 µm starken Titanfolie ausgelegt. Anschließend wurde ein ultraschallgereinigtes Kupferrohr mit 2 mm Wandstärke, das formschlüssig an der Titanfolie anliegt, in die Bohrung eingebracht. In das Innere des Kupferrohres wurde ein formschlüssiger Graphitkem eingeschoben. Durch Erschmelzen des Kupferrohres wurden die Ziegelbohrungen mit dem Kupferrohr hintergossen. Danach wurde das hintergossene Kupferrohr mechanisch auf 1 mm Wandstärke abgearbeitet. Die derart hintergossenen Ziegel wurden anschließend formschlüssig auf ein Rohr aus einer dispersionsverfestigten Kupferlegierung aufgeschoben. Zur Trennung der Ziegel voneinander und zur Vermeidung der Überlappung der Schweißnähte wurden die Rohre aus der dispersionsverfestigten Kupferlegierung unmittelbar angrenzend an die Ziegelenden mit Radialrillen versehen. Danach erfolgte die Verschweißung der einzelnen Ziegel mit dem Rohr aus der dispersionsverfestigten Kupferlegierung entlang des Rohrumfanges. Die hergestellten Schweißverbindungen wurden ebenfalls mittels metallographischer Untersuchungen und Ultraschallprüfung auf eventuelle Schweißfehler überprüft. Ein einwandfreier Zustand der Schweißverbindungen konnte nachgewiesen werden.

## Patentansprüche

1. Verfahren zur Herstellung eines thermisch hoch belastbaren Bauteils, bei dem ein oder mehrere Teile aus hochhitzebeständigem Material mit mindestens einem metallischen Teil verbunden werden, wobei die Teile aus hochhitzebeständigem Material vor der Verbindung auf der zu verbindenden Oberfläche mit einer metallischen duktilen Zwischenschicht versehen werden,
**dadurch gekennzeichnet**,
daß die Verbindung durch Elektronenstrahlschweißen erfolgt.

2. Verfahren zur Herstellung eines thermisch hoch belastbaren Bauteils nach Anspruch 1, dadurch gekennzeichnet, daß für das hochhitzebeständige Material kohlefaserverstärkter Graphit verwendet wird.

3. Verfahren zur Herstellung eines thermisch hoch belastbaren Bauteils nach Anspruch 1 oder 2, dadurch gekennzeichnet, daß für das metallische Teil eine hochwarmfeste Kupferlegierung verwendet wird.

4. Verfahren zur Herstellung eines thermisch hoch belastbaren Bauteils nach einem der Ansprüche 2 oder 3, dadurch gekennzeichnet, daß als Zwischenschicht reines Kupfer oder eine Kupferlegierung aufgebracht wird.

5. Verfahren nach Anspruch 4, dadurch gekennzeichnet, daß die Zwischenschicht mit einer Stärke zwischen 0,5 und 2 mm aufgebracht wird.

## Claims

1. Process for manufacturing a component with a high thermal load capacity, in which one part or a plurality of parts of a high-temperature-resistant material is/are joined to at least one metallic part, wherein the parts of a high-temperature-resistant material are provided with a metallic ductile interlayer on the surface to be joined before joining takes place, characterised in that the joining takes place by means of electron-beam welding.

2. Process for manufacturing a component with a high thermal load capacity according to claim 1, characterised in that carbon fibre-reinforced graphite is used for the high-temperature-resistant material.

3. Process for manufacturing a component with a high thermal load capacity according to claim 1 or 2, characterised in that a high-temperature copper alloy is used for the metallic part.

4. Process for manufacturing a component with a high thermal load capacity according to one of claims 2 and 3, characterised in that pure copper or a copper alloy is applied as the interlayer.

5. Process according to claim 4, characterised in that the interlayer is applied with a thickness between 0.5 and 2 mm.

## Revendications

1. Procédé de fabrication d'un élément à haute résistance thermique, dans lequel une ou plusieurs pièces en matériau hautement réfractaire sont assemblées à au moins une pièce métallique, les pièces en matériau hautement réfractaire étant pourvues, avant l'assemblage, d'une couche intermédiaire ductile métallique sur la surface à assembler, caractérisé en ce que l'assemblage est réalisée par soudage par bombardement électronique.

2. Procédé de fabrication d'un élément à haute résistance thermique selon la revendication 1, caractérisé en ce que du graphite armé de fibres de carbone est utilisé comme matériau hautement réfractaire.

3. Procédé de fabrication d'un élément à haute résistance thermique selon la revendication 1 ou 2, caractérisé en ce qu'un alliage de cuivre à haute résistance à la chaleur est utilisé pour la pièce métallique.

4. Procédé de fabrication d'un élément à haute résistance thermique selon l'une des revendications 2 ou 3, caractérisé en ce que du cuivre pur ou un alliage de cuivre est appliqué comme couche intermédiaire.

5. Procédé selon la revendication 4, caractérisé en ce que l'épaisseur de la couche intermédiaire appliquée est comprise entre 0,5 et 2 mm.
